# EUROPEAN PATENT SPECIFICATION

(11) **EP 4 415 271 B1**
(45) Date of publication and mention of the grant of the patent: **27.08.2025**
(21) Application number: 24156332.9
(22) Date of filing: 07.02.2024
(51) Int. Cl.: H04B 3/54

(54) **PHOTOVOLTAIC POWER STATION USING POWER LINE COMMUNICATION**
FOTOVOLTAISCHES KRAFTWERK MIT STROMLEITUNGSKOMMUNIKATION
CENTRALE PHOTOVOLTAÏQUE UTILISANT LA COMMUNICATION PAR LIGNE ÉLECTRIQUE

(30) Priority: 09.02.2023 CN 202320281553 U
(43) Date of publication of application: 14.08.2024
(73) Proprietor: Huawei Digital Power Technologies Co., Ltd., Shenzhen, Guangdong 518043 (CN)
(72) Inventor: SHUI, Wei, Shenzhen, 518043 (CN); MA, Xun, Shenzhen, 518043 (CN); LIU, Heming, Shenzhen, 518043 (CN)
(74) Representative: Epping - Hermann - Fischer

(56) References cited:
- EP-A1- 4 060 895
- CN-A- 112 702 432
- CN-A- 115 021 777

## Description

### TECHNICAL FIELD

This application relates to the field of power line communication technologies, and in particular, to a photovoltaic power station using power line communication.

### BACKGROUND

Power line communication (power line communication, PLC) is a communication technology of transmitting a signal in carrier mode by using a power line as a communication medium. Electronic device roles for performing communication in a PLC system may include a central coordinator (central coordinator, CCO), a proxy coordinator (proxy coordinator, PCO), and a station (station, STA). The CCO is a root node, and is responsible for controlling and collecting information about a proxy coordination point and the station in a matrix. The STA is a leaf node, and is responsible for reporting status information of the STA to the CCO. The PCO is an intermediate node, is located between the CCO and the STA, and is responsible for forwarding and transferring information.

With evolution of a photovoltaic power generating system, a quantity of inverters in a photovoltaic power station gradually increases, a quantity of STAs managed by a single CCO also gradually increases, and a distance between the inverter and the CCO becomes increasingly longer. Currently, a maximum communication distance exceeds 1000 meters. In addition, based on a grid-tied requirement, the inverter needs to be scheduled by a power grid. A scheduling instruction is transferred by the CCO to the STA through PLC. The scheduling instruction requires a low latency. The latency is usually at an ms level. Therefore, to resolve a contradiction between long-distance PLC and the low latency, a transmission signal loss needs to be reduced at a system level, to increase a signal-to-noise ratio.

CN 112 702 432 A relates to an automatic network construction method for photovoltaic module array, comprising the following steps: Step S1: The master station issues a start instruction to the data collector through the wireless communication network; Step S2: The data collector sends a first instruction to the central coordinator (CCO), where the first instruction is used to close the whitelist and open the component STA registration; Step S3: The component STA starts to send a registration message to the central coordinator; Step S4: The central coordinator reports the information of the networked STA to the data collector, and the information includes MAC address and component number information; Step S5: The central coordinator judges that the registration is over, generates registration end information, sends the registration end information to the data collector through a serial port message, and the data collector forwards the registration end information to the master station; Step S6: The master station uses the information of all registered STAs to generate a white list and issues the white list to the data collector; Step S7: The data collector notifies the central coordinator to synchronize the whitelist issued in step S6, and complete the automatic network formation process.

CN 115 021 777 A relates to a method for communicating with a distribution network in a low-voltage station area, wherein the method comprises: The edge gateway device uses the HPLC central coordinator for networking; After the device under test is connected to the network, the service master station corresponding to the edge gateway device issues tasks to the edge gateway device, The edge gateway device that receives the task executes the task based on the network status of other edge gateway devices in the network.

EP 4 060 895 Al relates to a photovoltaic system, wherein the photovoltaic system comprises an inverter and a plurality of photovoltaic units connected to the inverter, each photovoltaic unit comprises a controller and one or more photovoltaic modules connected to the controller, the photovoltaic module is configured to convert radiant energy of sunlight into a direct current, the controller is configured to regulate an output status of the one or more photovoltaic modules, and the inverter is configured to convert a direct current output by the photovoltaic unit into an alternating current and output the alternating current; the controller in each photovoltaic unit is further configured to obtain a power carrier signal sent by a controller in another photovoltaic unit of the plurality of photovoltaic units, determine an attenuation reference factor of the power carrier signal based on the obtained power carrier signal, and send the attenuation reference factor to the inverter, wherein the power carrier signal carries identification information of the controller that sends the power carrier signal, and the attenuation reference factor is used to reflect an attenuation degree of signal attenuation of the power carrier signal in a process of being transmitted, to the controller in the photovoltaic unit, from the controller that is in the another photovoltaic unit and that is indicated by the identification information in the power carrier signal; and the inverter is further configured to determine, based on the attenuation reference factor, the attenuation degree of the power carrier signal obtained by the controller in each photovoltaic unit, and group the plurality of photovoltaic units based on the attenuation degree of the power carrier signal obtained by each photovoltaic unit.

### SUMMARY

This application provides a photovoltaic power station using power line communication, to resolve a problem of a contradiction between long-distance communication of the photovoltaic power station and a low-latency requirement. According to a first aspect, this application provides a photovoltaic power station using power line communication. The photovoltaic power station may include a data collector, a central coordinator, and N inverters, where N is an integer greater than 1. The N inverters are connected in parallel and then connected to a transformer, the N inverters each convert a direct current of a photovoltaic module or an energy storage apparatus into an alternating current and transmit the alternating current to the transformer, and the transformer is configured to: boost the alternating current and then transmit a boosted alternating current to a power grid. Each inverter includes a power line communication module, and the power line communication module is configured to collect data information of the corresponding inverter, where the data information includes a voltage, a current, power, and internal operating status information of the inverter. The central coordinator includes at least two power line communication interfaces, the N inverters are classified into at least two subarrays, the at least two power line communication interfaces each are connected to a power communication module of an inverter in a corresponding subarray through a power line, and the at least two power line communication interfaces transmit data information of the N inverters to the central coordinator according to a PLC communication protocol. The data collector is connected to the central coordinator through an Ethernet cable, and the data collector collects, according to an Ethernet protocol, the data information of the N inverters that is collected by the central coordinator.

In the foregoing solution, an Ethernet communication interface is provided between the data collector and the central coordinator, and a large-bandwidth low-latency feature of Ethernet communication is used to reduce time for data transmission between the data collector and the central coordinator. This reduces a communication latency, and improves communication efficiency. In addition, the central coordinator in this application is connected to inverters through different power line communication interfaces, and physical isolation is configured, so that crosstalk between signals of different inverters is reduced, and a signal-to-noise ratio is increased.

In some possible implementation solutions, the inverters in the power station are classified into subarrays for management. The N inverters are classified into a first subarray and a second subarray, the first subarray is connected to a first bus of the transformer, and the second subarray is connected to a second bus of the transformer. The central coordinator includes a first power line communication interface and a second power line communication interface, the first power line communication interface is connected to a midpoint of the first bus, and the second power line communication interface is connected to a midpoint of the second bus. It may be understood that the inverters are classified into subarrays for management, so that mutual interference between different inverters in a photovoltaic system can be effectively reduced, and a signal-to-noise ratio can be effectively increased. Different power line communication interfaces of the central coordinator each are connected to a midpoint of a corresponding bus. This can effectively reduce a difference between attenuation of signals from different inverters in a subarray to the central coordinator, so that communication quality is improved.

In some possible implementation solutions, one central coordinator may manage one subarray. When a central coordinator has a plurality of different communication interfaces, a subarray managed by the central coordinator may be connected to only one of the communication interfaces. It may be understood that, when a quantity of inverters in the power station is not large, that the central coordinator manages only one subarray can also meet a communication requirement. In this case, the central coordinator uses only one of the communication interfaces, and another idle communication interface may be used for power station capacity expansion or upgrade.

In some possible implementation solutions, the inverters in the power station are classified into subarrays for management. The N inverters are classified into three subarrays or four subarrays. Different inverter subarrays may be connected to different interfaces of the central coordinator for corresponding isolation. Therefore, a quantity of independent interfaces on the central coordinator and a quantity of groups into which the N inverters are classified are not limited in this application.

In some possible implementation solutions, the inverters in the power station are classified into subarrays for management. In the first subarray, a larger distance between the inverter and the central coordinator indicates a smaller distance between the midpoint of the first bus and an interface that corresponds to the inverter and the first bus. In the second subarray, a larger distance between the inverter and the central coordinator indicates a smaller distance between the midpoint of the second bus and an interface that corresponds to the inverter and the second bus. It may be understood that, for an inverter that is physically far away from the central coordinator, a distance between a point at which the inverter is connected to a bus and a midpoint of the bus is smaller, that is, a distance between the point at which the inverter is connected to the bus and a point at which the central coordinator is connected to the bus is smaller. In this way, in a same subarray, a difference between distances between points at which different inverters are connected to the bus and the point at which the central coordinator is connected to the bus is reduced. This further reduces a communication attenuation difference between different inverters, and improves communication quality.

In some possible implementation solutions, the central coordinator includes at least two drivers, and the at least two drivers are in a one-to-one correspondence with the at least two power line communication interfaces of the central coordinator. It may be understood that, because different power line communication interfaces are connected to different inverter subarrays, it is ensured that different inverter subarrays may correspond to one independent driver, so that a signal transmitting capability of each inverter subarray is ensured, and communication quality is improved. In some possible implementation solutions, the inverter includes an alternating current connector, a differential mode inductor, and a power conversion circuit, the differential mode inductor is connected between the alternating current connector and the power conversion circuit, and the differential mode inductor is connected at a first connection point of the alternating current connector. It may be understood that, because the foregoing disposition in this application can improve a signal-to-noise ratio of PLC communication, a common mode inductor may be removed from the inverter, and only the differential mode inductor is retained, so that a PLC communication requirement can be met. This reduces device costs.

In some possible implementation solutions, the inverter includes a magnetic ring, and the magnetic ring is connected between the alternating current connector and the differential mode inductor. Generally, there may be a plurality of magnetic rings, and one magnetic ring may be disposed in each phase of circuit. It may be understood that the magnetic ring may increase an amplitude of a PLC transmitting signal, enhance filtering, and increase a transmission distance. In some possible implementation solutions, the inverter includes a power line communication module, the power line communication module is connected at a second connection point of the alternating current connector, and the second connection point is separated from the first connection point. It may be understood that the first connection point is a power connection point, electric energy is transferred between the power conversion circuit and the transformer through the first connection point, the second connection point is a PLC communication connection point, and a PLC communication signal is transferred between a CCO and a STA through the second connection point. The power connection point is separated from the communication connection point. This can effectively reduce interference of electric energy to a PLC signal, and improve communication quality.

In some possible implementation solutions, the data collector and the central coordinator are disposed in the transformer. It may be understood that, because the central coordinator needs to be connected to the bus in the transformer, and the data collector needs to be connected to the central coordinator through the Ethernet, the data collector and the central coordinator are disposed in the transformer, so that a device integration degree can be increased, and management and operation and maintenance costs can be reduced.

### BRIEF DESCRIPTION OF DRAWINGS

FIG. 1 is a schematic diagram of a power line communication system according to an embodiment of this application;
FIG. 2 is a schematic diagram of a structure of a photovoltaic power generating system;
FIG. 3 is a schematic diagram of a power line communication system in a photovoltaic power station according to an embodiment of this application;
FIG. 4 is a schematic diagram of internal implementation of a central coordinator in a power line communication system in a photovoltaic power station according to an embodiment of this application; and
FIG. 5 is a schematic diagram of another power line communication system in a photovoltaic power station according to an embodiment of this application.

Reference numerals:
1: transformer; 1-1/1-n/2-n: inverter; 3: data collector; 4: central coordinator; 41: first interface; 42: second interface; 51: first bus; 52: second bus; 61: alternating current connector; 61-1: first connection point; 61-2: second connection point; 62: differential mode inductor; 63: power conversion circuit; 64: power line communication module; 65: magnetic ring.

### DESCRIPTION OF EMBODIMENTS

The technical solutions in this application are described in the following with reference to the accompanying drawings. For ease of understanding, some terms in embodiments of this application are first described.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

PLC is a communication technology of transmitting a signal in carrier mode by using a power line as a communication medium. In comparison with another communication technology, a main advantage of PLC lies in that PLC can use an existing power line as a transmission medium, without a need of deploying a new line. This greatly reduces costs of early deployment. In addition, the line does not need to be separately maintained, so that costs of later maintenance are further reduced.

On the basis of the technical specifications for interconnection and interworking of state grid low-voltage power line broadband carrier communication, the Institute of Electrical and Electronics Engineers (Institute of Electrical and Electronics Engineers, IEEE) 1901.1 standard is officially released for implementation. In this standard, a PLC protocol stack is divided into the following layers: an application layer, a transport layer, a network layer, a data link layer, and a physical layer. The data link layer includes a network management sublayer and a media access control (medium access control, MAC) sublayer. The network management sublayer is responsible for packet aggregation and fragmentation at the application layer, network management, and route update and maintenance. The MAC sublayer is responsible for preempting a physical channel to provide reliable communication. The physical layer is responsible for encoding and modulating data from the MAC sublayer and then sending encoded and modulated data to a power line, and demodulating and decoding a signal received from the power line and then transmitting a demodulated and decoded signal back to the MAC sublayer.

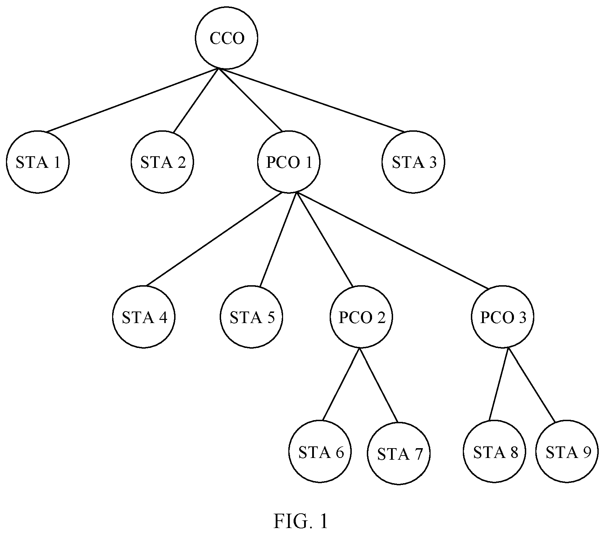

FIG. 1 is a schematic diagram of a PLC system according to an embodiment of this application. Electronic device roles for performing communication in the PLC system may include a central coordinator (central coordinator, CCO), a proxy coordinator (proxy coordinator, PCO), and a station (station, STA).

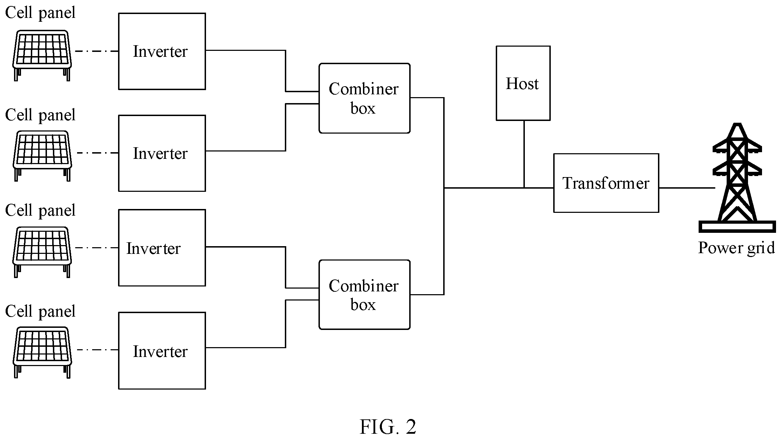

PLC may be applied to a plurality of scenarios. For example, in a photovoltaic power generating system shown in FIG. 2, a direct current generated by a photovoltaic cell panel is converged to an inverter. The inverter converts the direct current into an alternating current, and then transmits the alternating current to a combiner box. The combiner box converges alternating currents from a plurality of inverters, and then transmits an alternating current obtained through convergence to a transformer. The transformer converts the alternating current into high voltage electricity, and then transmits the high voltage electricity to a power grid. A host is connected between the combiner box and the transformer, and the host may be configured to: schedule each inverter and receive a device status of each inverter. Herein, the host corresponds to a data collector and the CCO, and the inverter corresponds to the station. The combiner box is not mandatory. The inverter may be directly connected to the transformer.

With continuous development of photovoltaic power generating technologies, a scale of photovoltaic power stations is increasingly large, there are more inverters in the power stations, and a quantity of STAs managed by a single CCO gradually increases. A plurality of inverters are connected to the CCO. However, distances between inverters connected to a same CCO and the CCO are different. Currently, a maximum communication distance between an inverter and the CCO exceeds 1000 m. In addition, based on a grid-tied requirement, the inverter needs to support the power grid. Therefore, the inverter needs to be scheduled by the power grid. A scheduling instruction is transferred by the CCO to the STA through PLC. The scheduling instruction requires a low latency. The latency is usually at an ms level. Therefore, to resolve a contradiction between long-distance PLC and the low latency, a transmission signal loss needs to be reduced at a system level, to increase a signal-to-noise ratio.

In view of this, an embodiment of this application provides a photovoltaic power station. The photovoltaic power station uses a new power line communication system. This can effectively increase a communication bandwidth, shorten a communication latency, improve communication efficiency, reduce interference, increase a signal-to-noise ratio, and improve communication quality.

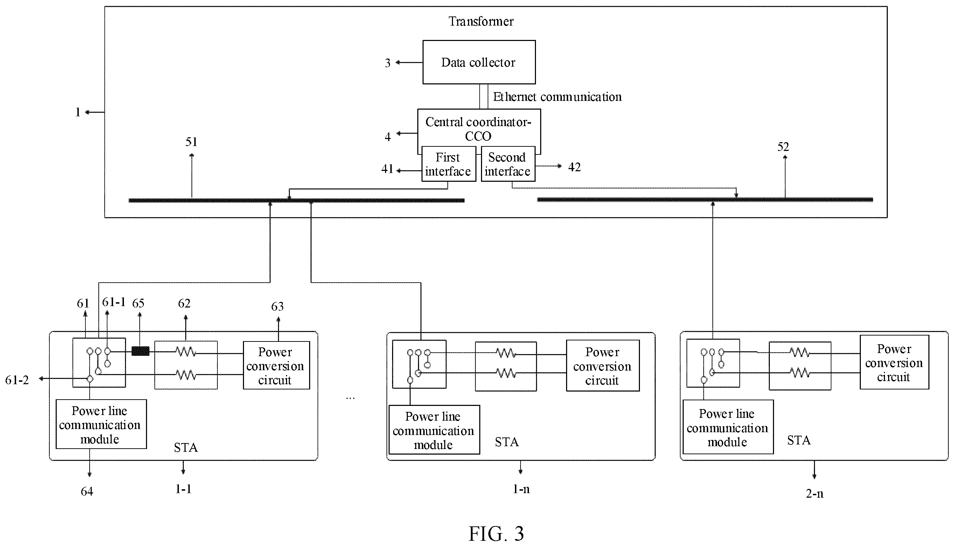

As shown in FIG. 3, the photovoltaic power station in this embodiment of this application includes inverters in a first subarray and inverters in a second subarray. The inverters in the first subarray include an inverter 1-1 and an inverter 1-n, and the inverters in the second subarray include an inverter 2-n. The inverter herein is merely an example. Actually, there is another inverter in each subarray. A central coordinator 4 and a data collector 3 are configured to collect information in the inverters in the first subarray and the inverters in the second subarray, where the information includes a voltage, a current, and power of each inverter, internal running status information of the device, and the like. The central coordinator 4 is a communication module, and is responsible for modulation and demodulation for PLC communication. The central coordinator 4 decodes information collected by each station, and then transmits decoded information to the data collector 3. Because the central coordinator 4 manages a large quantity of stations, an information amount in the central coordinator 4 is also very large. If a PLC protocol with a small bandwidth is still used for information transmission, information transmissionbetween the central coordinator 4 and the data collector 3 consumes a long time. This does not meet a requirement of the power station for a communication latency. Therefore, in this embodiment of this application, information is transferred between the central coordinator 4 and the data collector 3 through Ethernet communication. A bandwidth for Ethernet communication is much greater than a bandwidth for PLC communication, so that a time of data transfer between the central coordinator 4 and the data collector 3 can be effectively shortened, and communication efficiency can be effectively improved.

Inverters in the power station are classified into two subarrays. Inverters in a first subarray are connected to a first bus 51 in a transformer 1, and inverters in a second subarray are connected to a second bus 52 in the transformer 1. A first interface 41 of the central coordinator 4 is connected to a midpoint of the first bus 51 to communicate with the inverters in the first subarray, and a second interface 42 of the central coordinator 4 is connected to a midpoint of the second bus 52 to communicate with the inverters in the second subarray. Both the first interface 41 and the second interface 42 of the central coordinator 4 are power line communication interfaces, and the first interface 41 and the second interface 42 are respectively connected to the midpoints of the first bus 51 and the second bus 52, so that distances between different inverters in the subarray and the power line communication interface can be effectively reduced. This reduces an attenuation difference between different inverters in the subarray in PLC communication, and improves communication quality.

In addition, in this embodiment of this application, a sequence of wiring inverters in a subarray and a corresponding bus is also correspondingly optimized. Because there are a large quantity of inverters in the subarray, distances between different inverters and the bus are different, and a distance difference causes a communication attenuation difference. To reduce the attenuation difference, a difference between the distances between the inverters and the bus may be reduced. An actual communication distance is a distance between an inverter and a connection point at which the central coordinator 4 is connected to the bus. Therefore, in this application, an inverter at a long physical distance in a subarray is connected to a position that is close to a midpoint of a bus, to reduce a difference between distances between different inverters in the subarray and the midpoint of the corresponding bus, and finally reduce an attenuation difference. Specifically, a larger distance between the inverter in the first subarray and the central coordinator 4 indicates a smaller distance between he midpoint of the first bus 51 and an interface that corresponds to the inverter and the first bus 51, and a larger distance between the inverter in the second subarray and the central coordinator 4 indicates a smaller distance between the midpoint of the second bus 52 and an interface that corresponds to the inverter and the second bus 52.

In this embodiment of this application, corresponding optimization is also performed inside the inverter. First, it can be learned from the inverter in FIG. 3 that the inverter in this embodiment of this application includes an alternating current connector 61, a differential mode inductor 62, a power conversion circuit 63, a power line communication module 64, and a magnetic ring 65. In this embodiment of this application, a common mode inductor is removed. Based on previous optimization of this embodiment of this application, a signal-to-noise ratio of PLC communication can be effectively increased. Therefore, an inductance value of a filtering inductor inside the inverter may be reduced, the common mode inductor is removed, and only the differential mode inductor 62 is retained. In addition, to avoid large impact on the system caused by removal of the common mode inductor, in this embodiment of this application, the magnetic ring 65 is added between the alternating current connector 61 and the differential mode inductor 62, so that an inductance value of the common mode inductor can be compensated, and a signal amplitude can be increased. Costs of the magnetic ring 65 are lower than those of the common mode inductor. Therefore, in this embodiment of this application, costs of the system are effectively reduced while communication quality is ensured.

As shown in FIG. 3, it can also be learned that the alternating current connector 61 in the inverter 1-1 includes a first connection point 61-1 and a second connection point 61-2. The first connection point 61-1 is connected to the differential mode inductor 62, and the first connection point 61-1 is configured to: transfer a power signal and transmit electric energy. The second connection point 61-2 is connected to the power line communication module 64, and the second connection point 61-2 is configured to: transfer a PLC communication signal. In this embodiment of this application, the power signal and the communication signal are connected to different physical nodes, to decouple the power signal and the communication signal, so that mutual impact is avoided, a signal-to-noise ratio of communication is increased, and communication quality is ensured.

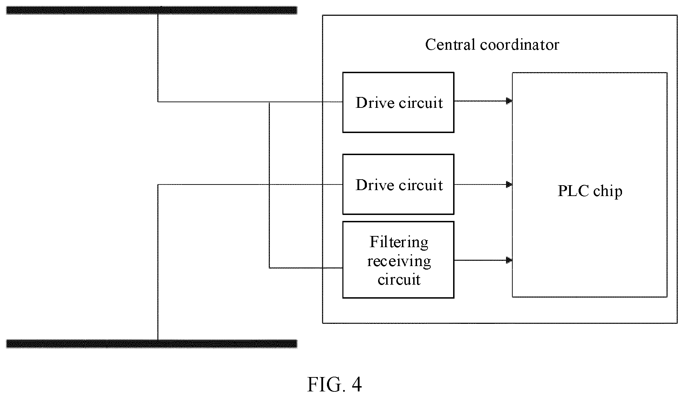

As shown in FIG. 4, matching FIG. 3, in this embodiment of this application, two independent interfaces in the central coordinator 4 are connected to different inverter subarrays. To further ensure communication quality, two corresponding drive circuits are disposed in the central coordinator 4, to ensure that each subarray can obtain sufficient signal transmit power. This improves signal quality, and ensures communication efficiency.

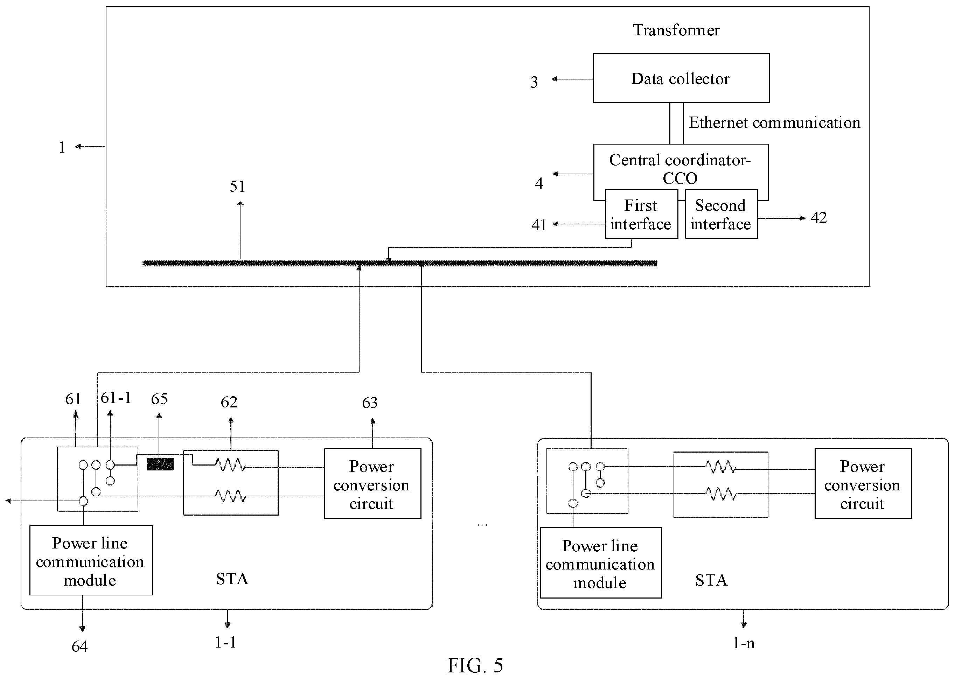

This application further provides Embodiment 2. As shown in FIG. 5, this application is also applicable to a single-subarray scenario. When a power station is initially constructed, a quantity of inverters is not large in the station, and all inverters can be managed by using a single subarray. Therefore, all the inverters in the power station are connected to a first interface 41 in a central coordinator 4, and a second interface 42 in the central coordinator 4 is floated. When a capacity of the power station is expanded, and the single subarray is not enough to manage all inverters, newly added inverters may constitute a new subarray, and are connected to the second interface 42 in the central coordinator 4. Other parts of Embodiment 2 are similar to those of Embodiment 1, and details are not described herein again.

## Claims

1. A photovoltaic power station using power line communication, wherein the photovoltaic power station comprises a data collector (3), a central coordinator (4), and N inverters (1-1, 1-n, 2-n), wherein N is an integer greater than 1; and the N inverters (1-1, 1-n, 2-n) are connected in parallel and then connected to a transformer (1), the N inverters (1-1, 1-n, 2-n) each are configured to: convert a direct current of a photovoltaic module or an energy storage device into an alternating current and transmit the alternating current to the transformer (1), and the transformer (1) boosts the alternating current and then transmits a boosted alternating current to a power grid;
each inverter (1-1, 1-n, 2-n) comprises a power line communication module (64), and the power line communication module (64) is configured to collect data information of the corresponding inverter (1-1, 1-n, 2-n), wherein the data information comprises a voltage, a current, power, and internal operating status information of the inverter (1-1, 1-n, 2-n);
the central coordinator (4) comprises at least two power line communication interfaces, the N inverters (1-1, 1-n, 2-n) are classified into at least two subarrays, the at least two power line communication interfaces each are connected to a power line communication module (64) of an inverter (1-1, 1-n, 2-n) in a corresponding subarray through a power line, and the at least two power line communication interfaces transmit data information of the N inverters (1-1, 1-n, 2-n) to the central coordinator (4) according to a PLC communication protocol; and
the data collector (3) is connected to the central coordinator (4) through an Ethernet cable, and the data collector (3) collects, according to an Ethernet protocol, the data information of the N inverters (1-1, 1-n, 2-n) that is collected by the central coordinator (4).

2. The photovoltaic power station according to claim 1, wherein that the N inverters (1-1, 1-n, 2-n) are classified into at least two subarrays comprises:
the N inverters (1-1, 1-n, 2-n) are classified into a first subarray and a second subarray, the first subarray is connected to a first bus (51) of the transformer (1), and the second subarray is connected to a second bus (52) of the transformer (1); and
the central coordinator (4) comprises a first power line communication interface and a second power line communication interface, the first power line communication interface is connected to a midpoint of the first bus (51), and the second power line communication interface is connected to a midpoint of the second bus (52).

3. The photovoltaic power station according to claim 2, wherein that the first subarray is connected to a first bus (51) of the transformer (1), and the second subarray is connected to a second bus (52) of the transformer (1) comprises:
in the first subarray, a larger distance between the inverter (1-1, 1-n, 2-n) and the central coordinator (4) indicates a smaller distance between the midpoint of the first bus (51) and an interface that corresponds to the inverter (1-1, 1-n, 2-n) and the first bus (51); and
in the second subarray, a larger distance between the inverter (1-1, 1-n, 2-n) and the central coordinator (4) indicates a smaller distance between the midpoint of the second bus (52) and an interface that corresponds to the inverter (1-1, 1-n, 2-n) and the second bus (52).

4. The photovoltaic power station according to claim 1, wherein the central coordinator (4) further comprises at least two drivers, and the at least two drivers are in a one-to-one correspondence with the at least two power line communication interfaces of the central coordinator (4).

5. The photovoltaic power station according to claim 1, wherein the inverter (1-1, 1-n, 2-n) comprises an alternating current connector (61), a differential mode inductor (62), and a power conversion circuit (63), the differential mode inductor (62) is connected between the alternating current connector (61) and the power conversion circuit (63), and the differential mode inductor (62) is connected at a first connection point (61-1) of the alternating current connector (61).

6. The photovoltaic power station according to claim 5, wherein the inverter (1-1, 1-n, 2-n) further comprises a magnetic ring (65), and the magnetic ring (65) is connected between the alternating current connector (61) and the differential mode inductor (62).

7. The photovoltaic power station according to claim 5 or 6, wherein the power line communication module (64) is connected at a second connection point (61-2) of the alternating current connector (61), and the second connection point (61-2) is separated from the first connection point (61-1).

8. The photovoltaic power station according to claim 1, wherein the data collector (3) and the central coordinator (4) are disposed in the transformer (1).

## Patentansprüche

1. Fotovoltaisches Kraftwerk mit Stromleitungskommunikation, wobei das fotovoltaische Kraftwerk einen Datensammler (3), einen zentralen Koordinator (4) und N Wechselrichter (1-1, 1-n, 2-n) umfasst, wobei N eine ganze Zahl größer als 1 ist; und die N Wechselrichter (1-1, 1-n, 2-n) parallel geschaltet und dann mit einem Transformator (1) verbunden sind und die N Wechselrichter (1-1, 1-n, 2-n) jeweils zu Folgendem konfiguriert sind: einen Gleichstrom eines fotovoltaischen Moduls oder einer Energiespeichervorrichtung in Wechselstrom umzuwandeln und den Wechselstrom an den Transformator (1) zu übertragen, wobei der Transformator (1) den Wechselstrom verstärkt und dann einen verstärkten Wechselstrom an ein Stromnetz überträgt;
wobei jeder Wechselrichter (1-1, 1-n, 2-n) ein Stromleitungskommunikationsmodul (64) umfasst und das Stromleitungskommunikationsmodul (64) dazu konfiguriert ist, Dateninformationen des entsprechenden Wechselrichters (1-1, 1-n, 2-n) zu sammeln, wobei die Dateninformationen eine Spannung, einen Strom, eine Leistung und interne Betriebsstatusinformationen des Wechselrichters (1-1, 1-n, 2-n) umfassen;
wobei der zentrale Koordinator (4) mindestens zwei Stromleitungskommunikationsschnittstellen umfasst, die N Wechselrichter (1-1, 1-n, 2-n) in mindestens zwei Teilarrays eingeteilt sind, die mindestens zwei Stromleitungskommunikationsschnittstellen jeweils über eine Stromleitung mit einem Stromleitungskommunikationsmodul (64) eines Wechselrichters (1-1, 1-n, 2-n) in einem entsprechenden Teilarray verbunden sind und die mindestens zwei Stromleitungskommunikationsschnittstellen gemäß einem PLC-Kommunikationsprotokoll Dateninformationen der N Wechselrichter (1-1, 1-n, 2-n) an den zentralen Koordinator (4) übertragen; und
der Datensammler (3) über ein Ethernet-Kabel mit dem zentralen Koordinator (4) verbunden ist und der Datensammler (3) gemäß einem Ethernet-Protokoll die Dateninformationen der N Wechselrichter (1-1, 1-n, 2-n) sammelt, die vom zentralen Koordinator (4) gesammelt werden.

2. Fotovoltaisches Kraftwerk nach Anspruch 1, wobei die N Wechselrichter (1-1, 1-n, 2-n) in mindestens zwei Teilarrays unterteilt sind, die Folgendes umfassen:
die N Wechselrichter (1-1, 1-n, 2-n) sind in ein erstes und ein zweites Teilarray unterteilt, das erste Teilarray ist mit einem ersten Bus (51) des Transformators (1) verbunden und das zweite Teilarray ist mit einem zweiten Bus (52) des Transformators (1) verbunden; und
der zentrale Koordinator (4) umfasst eine erste Stromleitungskommunikationsschnittstelle und eine zweite Stromleitungskommunikationsschnittstelle, wobei die erste Stromleitungskommunikationsschnittstelle mit einem Mittelpunkt des ersten Busses (51) verbunden ist und die zweite Stromleitungskommunikationsschnittstelle mit einem Mittelpunkt des zweiten Busses (52) verbunden ist.

3. Fotovoltaisches Kraftwerk nach Anspruch 2, wobei das Verbundensein des ersten Teilarrays mit einem ersten Bus (51) des Transformators (1) und des zweiten Teilarrays mit einem zweiten Bus (52) des Transformators (1) Folgendes umfasst:
im ersten Teilarray gibt eine größere Distanz zwischen dem Wechselrichter (1-1, 1-n, 2-n) und dem zentralen Koordinator (4) eine kleinere Distanz zwischen dem Mittelpunkt des ersten Busses (51) und einer Schnittstelle an, die dem Wechselrichter (1-1, 1-n, 2-n) und dem ersten Bus (51) entspricht; und
im zweiten Teilarray gibt eine größere Distanz zwischen dem Wechselrichter (1-1, 1-n, 2-n) und dem zentralen Koordinator (4) eine kleinere Distanz zwischen dem Mittelpunkt des zweiten Busses (52) und einer Schnittstelle an, die dem Wechselrichter (1-1, 1-n, 2-n) und dem zweiten Bus (52) entspricht.

4. Fotovoltaisches Kraftwerk nach Anspruch 1, wobei der zentrale Koordinator (4) ferner mindestens zwei Treiber umfasst und die mindestens zwei Treiber in einer Eins-zu-eins-Entsprechung mit den mindestens zwei Stromleitungskommunikationsschnittstellen des zentralen Koordinators (4) stehen.

5. Fotovoltaisches Kraftwerk nach Anspruch 1, wobei der Wechselrichter (1-1, 1-n, 2-n) einen Wechselstromanschluss (61), eine Differentialmodusdrossel (62) und eine Leistungsumwandlungsschaltung (63) umfasst, wobei die Differentialmodusdrossel (62) zwischen dem Wechselstromanschluss (61) und der Leistungsumwandlungsschaltung (63) verbunden ist und die Differentialmodusdrossel (62) mit einem ersten Verbindungspunkt (61-1) des Wechselstromanschlusses (61) verbunden ist.

6. Fotovoltaisches Kraftwerk nach Anspruch 5, wobei der Wechselrichter (1-1, 1-n, 2-n) ferner einen Magnetring (65) umfasst und der Magnetring (65) zwischen dem Wechselstromanschluss (61) und der Differentialmodusdrossel (62) verbunden ist.

7. Fotovoltaisches Kraftwerk nach Anspruch 5 oder 6, wobei das Stromleitungskommunikationsmodul (64) mit einem zweiten Verbindungspunkt (61-2) des Wechselstromanschlusses (61) verbunden ist und der zweite Verbindungspunkt (61-2) vom ersten Verbindungspunkt (61-1) getrennt ist.

8. Fotovoltaisches Kraftwerk nach Anspruch 1, wobei der Datensammler (3) und der zentrale Koordinator (4) im Transformator (1) angeordnet sind.

## Revendications

1. Centrale photovoltaïque utilisant la communication par ligne électrique, dans laquelle la centrale photovoltaïque comprend un collecteur de données (3), un coordinateur central (4) et N onduleurs (1-1, 1-n, 2-n), dans laquelle N est un nombre entier supérieur à 1 ; et les N onduleurs (1-1, 1-n, 2-n) sont connectés en parallèle puis connectés à un transformateur (1), les N onduleurs (1-1, 1-n, 2-n) sont chacun configurés pour : convertir le courant continu d'un module photovoltaïque ou d'un dispositif de stockage d'énergie en courant alternatif et transmettre ce courant alternatif au transformateur (1), et le transformateur (1) amplifie le courant alternatif puis transmet un courant alternatif amplifié au réseau électrique ;
chaque onduleur (1-1,1-n,2-n) comprend un module de communication par ligne électrique (64), et le module de communication par ligne électrique (64) est configuré pour collecter des informations de données de l'onduleur correspondant (1-1, 1-n, 2-n), dans laquelle les informations de données comprennent une tension, un courant, une puissance, et des informations sur l'état de fonctionnement interne de l'onduleur (1-1, 1-n, 2-n) ;
le coordinateur central (4) comprend au moins deux interfaces de communication par ligne électrique, les N onduleurs (1-1, 1-n, 2-n) sont classés en au moins deux sous-réseaux, les au moins deux interfaces de communication par ligne électrique sont chacune connectées à un module de communication par ligne électrique (64) d'un onduleur (1-1, 1-n, 2-n) d'un sous-réseau correspondant via une ligne électrique, et les au moins deux interfaces de communication par ligne électrique transmettent les informations de données des N onduleurs (1-1, 1-n, 2-n) au coordinateur central (4) selon un protocole de communication PLC ; et
le collecteur de données (3) est connecté au coordinateur central (4) via un câble Ethernet, et le collecteur de données (3) collecte, selon un protocole Ethernet, les informations de données des N onduleurs (1-1, 1-n, 2-n) qui sont collectées par le coordinateur central (4).

2. Centrale photovoltaïque selon la revendication 1, dans laquelle les N onduleurs (1-1, 1-n, 2-n) sont classés en au moins deux sous-réseaux, comprend :
les N onduleurs (1-1, 1-n, 2-n) sont classés en un premier sous-réseau et un second sous-réseau, le premier sous-réseau est connecté à un premier bus (51) du transformateur (1), et le second sous-réseau est connecté à un second bus (52) du transformateur (1) ; et
le coordinateur central (4) comprend une première interface de communication par ligne électrique et une seconde interface de communication par ligne électrique, la première interface de communication par ligne électrique est connectée à un point médian du premier bus (51), et la seconde interface de communication par ligne électrique est connectée à un point médian du second bus (52).

3. Centrale photovoltaïque selon la revendication 2, dans laquelle le premier sous-réseau est connecté à un premier bus (51) du transformateur (1), et le second sous-réseau est connecté à un second bus (52) du transformateur (1), comprend :
dans le premier sous-réseau, une plus grande distance entre l'onduleur (1-1, 1-n, 2-n) et le coordinateur central (4) indique une plus petite distance entre le point médian du premier bus (51) et une interface qui correspond à l'onduleur (1-1, 1-n, 2-n) et au premier bus (51) ; et
dans le second sous-réseau, une plus grande distance entre l'onduleur (1-1, 1-n, 2-n) et le coordinateur central (4) indique une plus petite distance entre le point médian du second bus (52) et une interface qui correspond à l'onduleur (1-1, 1-n, 2-n) et au second bus (52).

4. Centrale photovoltaïque selon la revendication 1, dans laquelle le coordinateur central (4) comprend également au moins deux pilotes, et les au moins deux pilotes sont en correspondance biunivoque avec les au moins deux interfaces de communication par ligne électrique du coordinateur central (4).

5. Centrale photovoltaïque selon la revendication 1, dans laquelle l'onduleur (1-1, 1-n, 2-n) comprend un connecteur de courant alternatif (61), un inducteur de mode différentiel (62), et un circuit de conversion de puissance (63), l'inducteur de mode différentiel (62) est connecté entre le connecteur de courant alternatif (61) et le circuit de conversion de puissance (63), et l'inducteur de mode différentiel (62) est connecté à un premier point de connexion (61-1) du connecteur de courant alternatif (61).

6. Centrale photovoltaïque selon la revendication 5, dans laquelle l'onduleur (1-1, 1-n, 2-n) comprend également un anneau magnétique (65), et l'anneau magnétique (65) est connecté entre le connecteur de courant alternatif (61) et l'inducteur de mode différentiel (62).

7. Centrale photovoltaïque selon la revendication 5 ou 6, dans laquelle le module de communication par ligne électrique (64) est connecté à un second point de connexion (61-2) du connecteur de courant alternatif (61), et le second point de connexion (61-2) est séparé du premier point de connexion (61-1) .

8. Centrale photovoltaïque selon la revendication 1, dans laquelle le collecteur de données (3) et le coordinateur central (4) sont disposés dans le transformateur (1).
